# EUROPÄISCHE PATENTANMELDUNG

(11) **EP 0 999 216 A2**
(43) Veröffentlichungstag der Anmeldung: **10.05.2000**
(21) Anmeldenummer: 99117524.1
(22) Anmeldetag: 04.09.1999
(51) Int. Cl.: C07F 9/52

(54) **Verfahren zur Herstellung von Alkyldihalogenphosphanen durch Photoinitiierung der Alkylierung von Phosphortrihalogeniden**

(30) Priorität: 07.09.1998 DE 19840553
(71) Anmelder: Aventis Research & Technologies GmbH & Co. KG, 65926 Frankfurt am Main (DE)
(72) Erfinder: Kühlein, Klaus, Prof. Dr., 65779 Kelkheim (DE); Hagemeyer, Alfred, Dr., 48431 Rheine (DE); Werner, Harald, Dr., 61350 Bad Homburg (DE); Dingerdissen, Uwe, Dr., 64342 Seeheim-Jugenheim (DE); Zeyss, Sabine, Dr., 65779 Kelkheim-Fischbach (DE)

(57) **Zusammenfassung**

Verfahren zur Herstellung von aliphatischen Alkyldihalogenphosphanen der allgemeinen Formel RPHal₂, mit R=C₁-C₄,-Alkyl und Hal= Cl, Br, I, F durch Umsetzung eines aliphatischen C₁-C₄-Kohlenwasserstoffs mit einem Phosphortrihalogenid, wobei die Reaktion photochemisch mit einer UV-Excimer-Strahlungsquelle initiiert wird.

## Beschreibung

Die vorliegende Erfindung beschreibt ein photochemisches Verfahren zur Herstellung von Alkyldihalogenphosphanen durch Umsetzung eines aliphatischen Alkans mit einem Phosphortrihalogenid in Gegenwart oder Abwesenheit eines Katalysators. Durch Einstrahlung von monochromatischer UV-Excimer-Strahlung erfolgt die Photoinitiierung einer Radikalkettenreaktion.

Alkyldihalogenphosphane sind wichtige Vor- und Zwischenprodukte in der chemischen Industrie. Sie finden u.a. Verwendung als Kraftstoffadditive, bei der Herstellung von Flammschutzmitteln und flammhemmenden Zusätzen für Polymere, als Weichmacher für Kunststoffe, als Stabilisatoren für Polyolefine und als Vorprodukte für Pflanzenschutzmittel. Insbesondere Methyldichlorphosphan (MDP) ist ein Precursor für eine Reihe von kommerziellen Bioziden und Herbiziden und wird daher großtechnisch hergestellt.

Bei den bekannten Verfahren zur Herstellung von Methyldichlorphosphan wird die Reaktion von Methan und PCl₃ zu MDP (CH₃PCl₂) und HCl bei hohen Temperaturen von 500 - 600°C und in einem Druckbereich von typischerweise 1 bis 10 bar durchgeführt, wobei erhebliche Mengen an Chlorkohlenwasserstoffen wie CCl₄ als Katalysator zugesetzt werden. Die Reaktion verläuft über einen thermisch initiierten Radikalmechanismus, mit z.B. CCl₃⁻als Starterradikalen. Dabei entsteht ein kompliziertes Produktspektrum mit zahlreichen Nebenprodukten. Methan wird im stöchiometrischen Überschuß eingesetzt und im Kreis gefahren. Für die Aufbereitung des Produktgemisches sind weitere Additive erforderlich. Der thermische Prozeß ist mit zahlreichen Nachteilen behaftet, von denen die Korrosion und Verkokung im Reaktionsrohr, der unvollständige Umsatz und die Beseitigung der Nebenprodukte besonders hervorzuheben sind. Daher besteht noch erhebliches Verbesserungspotential für diesen Prozeß.

So beschreibt z.B. US 3 210 418 die Herstellung aliphatischer Alkyl-Dihalogenphosphane aus Alkan und Phosphortrihalogenid in Gegenwart von O₂ oder Cl₂ oder NOₓ als Katalysator. Die Beispiele behandeln die Reaktionen von PCl₃ mit Methan, Ethan, Ethylen, Butan, Benzol und Chlorbenzol. Die Reaktion von PCl₃ und Methan zu MDP in Gegenwart von O₂ als Katalysator liefert je nach Reaktionsbedingungen Umsätze zwischen 1 und 23%. Dabei wurde erkannt, daß der Umsatz um so höher ist, je größer das Methan/PCl₃-Verhältnis ist. Mit Cl₂ als Katalysator wird ein Umsatz von 9% erreicht.

Die Alkylierung von PCl₃ mit Methan und Ethan wurde von Pianfetti und Quin ( J. Amer. Chem. Soc. 84 (1962) 851-854) beschrieben. Sie stellten fest, daß die Reaktion durch O₂ katalysiert wird und durch Propylen inhibiert wird. Ohne O₂-Katalyse werden bei hohen Temperaturen >550°C Umsätze von 10-15% zu MDP erreicht, während unterhalb von 500°C kein Produkt gefunden wird. Mit O₂ als Katalysator werden dagegen bei 575°C maximal 20% Umsatz erzielt. Es entsteht ein gummiartiger fester Rückstand.

Zwei weitere Verfahren beschreiben die Herstellung von Alkyldihalogenphosphanen auf der Basis von elementarem Phosphor und Alkylhalogenid in Gegenwart eines Katalysators.

So wird in DE 1122522 die Darstellung von Alkylhalogenphosphanen durch Überleiten von Alkylhalogenid über roten Phosphor mit Beimischungen bestehend aus Kupfer, Silber, Zink oder Kombinationen dieser Metalle (5-30 Gew.%) bei Normaldruck und Temperaturen zwischen 320 und 380°C beschrieben. In Abhängigkeit von Katalysatorkonzentration, Katalysatorzusammensetzung und Reaktionstemperatur wird das entsprechende Alkyldihalogenphosphan erhalten, das aber immer mit Dialkylhalogenphosphan, Phosphortrihalogenid und gegebenenfalls auch mit gelbem Phosphor verunreinigt ist. Das Verfahren ist sehr unselektiv und erfordert eine aufwendige Reinigungsprozedur um reines Alkyldihalogenphosphan zu erhalten.

Ein weiteres Verfahren zur Herstellung von Alkylchlorphosphanen aus elementarem Phosphor und Alkylhalogenid wird in FR 1547575 beschrieben. Hier werden beide Reaktionspartner in der Gasphase über Aktivkohle als Katalysator geleitet, wobei Wasserstoff oder HCl beigemischt werden können, um die Ausbeute zu steigern. Die Reaktion läuft unter Normaldruck bei Temperaturen um 350°C ab und liefert nicht näher spezifizierte Gemische aus Alkyldichlorphosphan und Dialkylchlorphosphan. Die Lebensdauer des Aktivkohlekatalysators ist sehr begrenzt. Mit 38 g Katalysator konnten 240 g des Gemisches der beiden Alkylchlorphosphane hergestellt werden.

Ein photochemisches Verfahren zur Herstellung von Dihalogenphosphinen wird in DE-A-215 6810 beschrieben. Hierbei findet die Umsetzung eines Phosphorhalogenids mit einem Alkan/Cycloalkan unter UV-Bestrahlung in flüssiger Phase statt, wobei die UV-Bestrahlung mittels Lampen erfolgt, die eine Strahlung der Wellenlänge unter 320 nm, besonders zwischen 210 nm und 300 nm, aussenden. Die Phosphorhalogenide bilden dabei nach einer bestimmten Bestrahlungszeit teilweise feste Verbindungen, die sich auf dem Lampenträger ablagern. Bei der hier verwendeten Hg-Damplampe wurde mit komplizierten Filtern der Spektralbereich um 254 nm ausgekoppelt. In den Beispielen wird die Umsetzung von PCl₃ mit Cyclohexan, Isobutan, Heptan, Dodecan, und Cyclodecan in flüssiger Phase beschrieben. Die erzielten Produktausbeuten sind trotz sehr langer Bestrahlungszeiten (ca. 20 Minuten) sehr schlecht (ca. 2% Ausbeute). Es entsteht ein 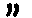 festes gelb-oranges Produkt, das den Lampenträger undurchsichtig macht".

Bei der konventionellen Photoinitiierung mit Breitband-UV-Lampen ist die Selektivität sehr gering. Die erhaltenen Alkyldichlorphosphane befinden sich immer im Gemisch mit einer großen Menge unerwünschter Nebenprodukte, die schwierig abzutrennen sind.

Die Aufgabe der vorliegenden Erfindung ist es somit ein Verfahren zur Herstellung von Alkyldihalogenphosphanen bereitzustellen, das die Nachteile der bisher bekannten Verfahren vermeidet.

Die vorliegende Erfindung löst diese Aufgabe und betrifft ein Verfahren zur Herstellung von Alkyldihalogenphosphanen der Formel RPHal₂, mit R= C₁-C₄-Alkyl, vorzugsweise R=CH₃, und Hal= Cl, Br, I, F, vorzugsweise ist Hal=Cl, durch Umsetzung eines aliphatischen C₁-C₄-Kohlenwasserstoffs mit einem Phosphortrihalogenid zu dem entsprechenden Alkydihalogenphosphan, wobei die Reaktion photochemisch mit einer UV-Excimer-Strahlungsquelle (wie gepulsten Excimerlasern oder vorzugsweise inkohärenten Excimerlampen) initiiert wird.

Bei dem erfindungsgemäßen Verfahren wird eine ein C₁-C₄-Alkan und ein Phosphortrihalogenid, insbesondere Phosphortrichlorid in Kontakt gebracht und die Reaktionsmischung einer UV-Excimer-Strahlung bei Temperaturen im Bereich von 0 bis 650°C, insbesondere 200 bis 500°C, vorzugsweise 250 bis 450°C ausgesetzt. Die Reaktion kann in der Flüssigphase in Gegenwart eines Lösungsmittels oder auch ohne Lösungsmittel durchgeführt werden. In einer bevorzugten Ausführungsform wird das erfindungsgemäße Verfahren in der Gasphase durchgeführt.
Der Reaktionsdruck liegt bei dem vorliegenden Verfahren im Bereich von 500 mbar bis 25 bar, vorzugsweise 1 bis 10 bar.

Die Bestrahlungsdauer, d.h. die Verweilzeit des Gemisches der Reaktionsbestandteile im Reaktionsraum liegt üblicherweise im Bereich von 0,01 sec bis 1000 sec, vorzugsweise 0,1 bis 600 sec im Batchbetrieb. Bei kontinuierlicher Reaktionsführung wird vorzugsweise kontinuierlich eingestrahlt.
Durch die Photodissoziation der Reaktanden werden Starterradikale gebildet, die eine Radikalkettenreaktion initiieren und aufrechterhalten, die mit hoher Selektivität die gewünschten Alkyldihalogenphosphane liefert.

Das Molverhältnis des aliphatischen Kohlenwasserstoffs zum Phosphortrihalogenid liegt erfindungsgemäß im Bereich von 20:1 bis 1:20, vorzugsweise 10:1 bis 1:10.

Die Reaktion kann gegebenenfalls in Gegenwart eines Katalysators durchgeführt werden. Als Katalysatoren kommen z.B. folgende in Frage :Cl₂, O₂, COCl₂, NOₓ oder deren Mischungen.
Der Katalysator wird vorzugsweise dann eingesetzt, wenn dadurch die Effizienz der Radikalbildung gesteigert werden kann. Der Katalysator dient insbesondere dazu das eingestrahlte UV-Licht zu absorbieren und durch Photodissoziation Starterradikale bilden. Da PCl₃ und Methan oberhalb 200 nm Wellenlänge nicht absorbieren und UV-Strahlung <200 nm experimentell schwierig ist, ist es für die vorliegende Erfindung vorteilhaft, wenn ein Katalysator zugesetzt wird, der bei Wellenlängen >200 nm absorbiert und dabei zu Radikalen photodissoziiert. z.B. wird Cl₂ durch 308 nm Licht sehr effizient mit hoher Quantenausbeute zu Cl-Radikalen photodissoziiert, die die Kettenreaktion starten. Experimentell hat man die einmalige Möglichkeit, eingestrahlte Excimerwellenlänge und Katalysator aufeinander abzustimmen, z.B. nahe dem UV-Absorptionsmaximum des Katalysators einzustrahlen.

Die Menge des Katalysators bezogen auf das Phosphortrihalogenid liegt im Bereich von 0 bis 50 mol%, vorzugsweise 0,1 bis 20 mol%.

Es ist auch möglich, die Reaktion in Anwesenheit von weiteren Sensibilisatoren, wie z.B. UV-Absorbern durchzuführen.

In einer bevorzugten Ausführung des erfindungsgemäßen Verfahrens wird ein Reaktor mit einer oder mehreren Tauchlampen verwendet, der aus einem Behälter für die Reaktanden besteht, in den eine oder mehrere UV-Excimerlampen eintauchen, die sich in einem Lampenträger aus Quarz befinden.

In einer weiteren bevorzugten Ausführungsform wird für diese Reaktion ein optischer Aufbau verwendet, der mehrere Lampen enthält, die um einen ringförmigen Behälter für die Reaktionsteilnehmer (z.B. zylindrisches Rohr aus UV-durchlässigem Quarz) angeordnet sind.

Die Reaktion kann sowohl kontinuierlich wie diskontinuierlich durchgeführt werden.

Die Isolierung der entstandenen Dihalogenphosphane kann nach bekannten Methoden, z.B. durch Kondensation des Reaktionsproduktes mit anschließender fraktionierter Destillation erfolgen.

Die Photoinitiierung durch UV-Excimer-Strahlung gemäß des erfindungsgemäßen Verfahrens weist gegenüber dem bekannten Stand der Technik eine Reihe von Vorteilen auf. Aufgrund der effizienten Radikalbildung durch Photodissoziation kann bei tieferen Reaktionstemperaturen gearbeitet werden. Dadurch werden die Verkokungsprobleme weitgehend entschärft, die Standzeit der Anlage verlängert und somit der Ausstoß an Alkyldihalogenphosphan, insbesondere MDP, erhöht. Crackreaktionen der beteiligten Kohlenwasserstoffe werden zurückgedrängt. Zudem ergibt sich eine Energieeinsparung. Es werden bessere Selektivitäten und damit eine verbesserte Verarbeitbarkeit des Rohproduktes sowie eine Absenkung des Bedarfs an Additiven erreicht. Eine der bevorzugten Ausführungsformen der Erfindung verzichtet auf Initiatoren wie CCl₄ und senkt damit einerseits die Materialkosten des Prozesses und trägt andererseits zur Entschärfung der Korrosionsproblematik bei.

Zur Photoinitiierung können im Prinzip sowohl UV-Lichtquellen als auch Lichtquellen, die sichtbares Licht aussenden, eingesetzt werden. Da die Absorptionskoeffizienten der im erfindungsgemäßen Verfahren verwendeten Stoffe im ultravioletten Spektralbereich wesentlich höher sind als im sichtbaren Spektralbereich, kann mit entsprechend niedrigeren Leistungsdichten gearbeitet werden, falls UV-Lichtquellen eingesetzt werden. Da dadurch ein wesentlich höherer Durchsatz erreicht wird, ist nur der Einsatz von UV-Lichtquellen sinnvoll, wobei die Quellen mit den kürzesten Wellenlängen die höchste Effizienz aufweisen.

Zur Erzeugung von UV-Strahlung werden Lampen, Laser oder sonstige Strahlungsquellen wie Elektronenspeicherringe (Synchrotrons) oder Plasmaentladungen eingesetzt. Bei der Benutzung von Lampen stehen vor allem Hg-Dampflampen (mit starken Emissionslinien bei einer Wellenlänge von 185 nm und 254 nm) und spektral eng begrenzte Excimerlampen, bei denen die UV-Strahlung durch den Zerfall von Excimeren oder Exciplexen wie Kr₂* (Wellenlänge 146 nm), Xe₂* (172 nm), KrCl* (222 nm) oder XeCl* (308 nm) entsteht, zur Verfügung. Als leistungsstarke UV-Laser werden gepulste Excimerlaser eingesetzt. Auch hier entsteht das Licht durch den Zerfall von Excimeren oder Exciplexen wie F₂* (154 nm), ArF* (193 nm), KrF* (248 nm), XeCl* (308 nm) und XeF* (351 nm). Es können auch frequenzvervielfachte Nd-YAG:Laser (Wellenlänge 1064 nm / n; n = 3, 4, 5, ...) verwendet werden. Weitere Quellen für UV-Strahlung sind Sychrotrons, die eine breitbandige Strahlung bis in den Röntgenbereich liefern, und das Licht einer Plasmaentladung bei niedrigem Druck.

In den Büchern 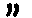 Laser Processing and Chemistry" (Springer-Verlag, Berlin-Heidelberg-New York, 1996) und 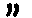 Chemical Processing with Lasers" (Springer-Verlag, Berlin-Heidelberg-New York, 1986) von D. Bäuerle werden detaillierte Informationen zu Strahlungsquellen und Verfahren gegeben.

Photoinitiierungen mit leistungsstarken UV-Hg-Dampflampen werden oder wurden technisch genutzt bei Photooximierungen, Sulfochlorierungen oder Sulfoxidationen sowie zur Härtung von strahlenhärtbaren Lacken und Klebstoffen. Die technische Vitamin-D3-Synthese wird ebenfalls mit breitbandigen Hg-Lampen und komplizierten Filter- und Kühlsystemen zur Selektion der wirksamen Wellenlängen für die Ringschlußreaktion und zum Schutz des Produktes vor photolytischer Zersetzung betrieben.

Zur Photoinitiierung werden technisch also üblicherweise UV-Quecksilberdampflampen eingesetzt. Hg-Dampflampen sind breitbandige Strahlungsquellen mit Spektralanteilen sowohl im kurzwelligen VUV-Bereich (Vakuum-UV) als auch im sichtbaren Bereich. Damit ist die Leistungsdichte im erforderlichen (für die Photoinitiierung wirksamen) Spektralbereich von ca. 150 - 350 nm also wesentlich geringer als die Nennleistung der Lampen. Ferner können die unerwünschten kurz- und langwelligen Spektralanteile zu Nebenreaktionen, Ablagerungen auf den Strahlungsquellen bzw. Reaktorwandungen oder Erwärmungen führen und müssen daher oft ausgefiltert werden (Energievernichtung).

Der wichtigste, halbwegs selektive (konventionelle) UV-Strahlertyp basiert auf der Niederdruckglimmentladung in Quecksilber/Edelgas-Gemischen, wobei die Quecksilberresonanzlinien bei 254 nm und schwächer bei 185 nm (zusätzlich zum noch schwächeren Kontinuum) emittiert werden. Verglichen mit Excimer-Strahlern ist die Bandbreite immer noch erheblich größer. Außerdem ist die Wellenlänge nicht variabel, sondern man ist auf 254 nm festgelegt. Alle anderen konventionellen UV-Quellen wie Xenon-, Deuteriumlampe, Argon-Miniarc und Niederdruck-Edelgasentladungen weisen viel zu niedrige Photonenflüsse auf und sind technisch uninteressant.
Eine Alternative zu den breitbandigen Hg-Lampen sind monochromatische UV-Excimer-Strahler. Im Spektralbereich zwischen 100 - 450 nm stehen etwa 20 diskrete Wellenlängen zur Verfügung. Mit Excimer-Strahlungsquellen kann gezielt auf der richtigen Wellenlänge eingestrahlt werden und somit die obengenannten Nachteile vermieden werden. Zudem führt die i.a. geringere Nennleistung der Excimer-Strahlungsquellen (bei besserer Effizienz der Radikalbildung) zu direkten Einsparungen an elektrischer Energie.

Mit Hilfe des erfindungsgemäßen Verfahrens kann die Bildung der Alkyldihalogenphosphan-Folgeprodukte, die für die Verkokung verantwortlich gemacht werden, bei tieferen Reaktionstemperaturen < ca. 500°C nahezu vollständig vermieden werden ohne einen nennenswerten Rückgang der Ausbeute hinnehmen zu müssen. Ferner wird bei tiefen Temperaturen die Druckabhängigkeit der Reaktion unbedeutend, so daß vorteilhafterweise bei niedrigen Drucken oder sogar bei Normaldruck gearbeitet werden kann.

Mit dem erfindungsgemäßen Verfahren können deutlich höhere Umsätze, nämlich im Bereich von 15 bis 35%, insbesondere > 20% bis 35%, als mit den bekannten Verfahren (ca. 10-20%) erreicht werden. Das vorliegende Verfahren stellt somit einen effizienten Radikalbildungsmechanismus bereit, der unabhängig von der Reaktionstemperatur ist, so daß Initiierung der Reaktion und Reaktionsbedingungen getrennt optimiert werden können.

Durch Einsatz von monochromatischer UV-Excimer-Strahlung ist es möglich eine hohe Selektivität zu erzielen. Ferner ist die Reaktion auf diese Weise leicht steuerbar und erfordert keine aufwendigen Apparaturen, da sowohl Excimer-Laser als auch Excimer-Lampen-Module als Komplettsysteme kommerziell erhältlich sind.
Da Excimerstrahlung aufgrund der Physik ihrer Erzeugung immer monochromatisch ist und die optimale (diskrete) Wellenlänge vom Experimentator wählbar ist, entfallen die für Hg-Lampen notwendige komplizierte Filter- und Kühl-Peripherie, so daß Excimerstrahler weniger aufwendig, wesentlich kompakter, sparsamer im Energieverbrauch, leicht steuerbar und einfach zu bedienen sind.

Erfindungsgemäße UV-Strahlungsquellen sind Excimer-Strahlungsquellen wie gepulste Excimer-Laser oder inkohärente Excimer-Lampen. Besonders bevorzugt sind Excimer-Lampen. Gegenüber den Excimer-Lasern zeichnen sich Excimer-Lampen durch größere Zuverlässigkeit, einfachere Handhabung und geringere Betriebskosten aus. Erfindungsgemäß wird die UV-Excimer-Strahlung insbesondere mittels gepulster Excimer-Laser oder mittels inkohärenter Excimer-Lampen erzeugt.

Eine Vielzahl von Methoden zur Erzeugung inkohärenter Excimerstrahlung ist untersucht worden, wobei ein spezieller Entladungstyp für industrielle Anwendungen großes Potential besitzt (Kogelschatz, Esrom, Laser und Optoelektronik 22(4) (1990) 55-59). Bei diesem neuen inkohärenten UV-Strahler werden Excimere in einer stillen elektrischen Entladung gebildet, einer Nichtgleichgewichtsentladung, die gelegentlich auch als Barrierenentladung bezeichnet wird. Das wichtigste Merkmal dieses Entladungstyps ist die Existenz (mindestens) einer dielektrischen Barriere, also eines Isolators, im Strompfad zwischen den Elektroden. Das Dielektrikum (z.B. Quarzrohr) bewirkt eine kapazitive Kopplung zwischen der treibenden elektrischen Wechselspannung und dem Entladungsplasma. Eine robuste Bauweise wird z.B. durch zwei koaxial angeordnete Quarzrohre ermöglicht, wobei ein ringförmiger Entladungsspalt entsteht. Die Quarzwände dienen gleichzeitig als Dielektrika. Beide Elektroden befinden sich außerhalb des Entladungsraumes und kommen mit dem Plasma nicht in Berührung. Die UV-Strahlung kann nach innen oder nach außen (durch die z.B. als Drahtnetz ausgebildeten Elektroden) austreten. Die erreichbaren Leistungsdichten liegen mittlerweile (Stand 1998) bei 200 mW/cm² bei einer Bandbreite von nur ca. 5 nm. Durch Parallelschaltung mehrerer Entladungsröhren lassen sich sehr hohe UV-Strahlungsleistungen erzielen.

Der Excimerstrahler sendet Pakete von äußerst kurzen intensiven UV-Strahlungspulsen aus von jeweils nur einigen Nanosekunden Pulsdauer. Durch die äußere Versorgungsquelle kann sowohl die Intensität als auch die Dauer der Emissionsperioden gesteuert werden. Ein weiteres wichtiges Merkmal der Entladungsröhre ist der geschlossene Entladungsraum, der ausschließlich durch Quarzwände begrenzt wird. Dadurch ist die für die Excimerbildung erforderliche Reinheit der Gase über längere Zeit gewährleistet. Es zeichnet sich ab, daß die bei den Excimerlasern eingesetzten, umfangreichen Apparaturen für die Umwälzung und Reinigung der Gasmischungen für diese inkohärenten Excimerstrahler nicht erforderlich sind.

Für das erfindungsgemäße Verfahren kommt UV-Excimerstrahlung zum Einsatz, die vorteilhafterweise monochromatisch ist und hohe Leistungsspitzen aufweist. Geeignete Wellenlängen liegen im Bereich von 40 bis 400 nm. Bevorzugte Wellenlängen sind 172 nm (Xe₂*-Lampe), 193 nm (ArF*-Laser), 222 nm (KrCl*-Lampe), 248 nm (KrF*-Laser), 308 nm (XeCl*-Lampe) und 351 nm (XeF*-Laser). Geeignete UV-Intensitäten liegen zwischen 0,01 und 100 W/cm². Bevorzugte Parameter sind UV-Strahlungsleistungen zwischen 0,1 und 20 W/cm².
Bei Einsatz gepulster Laser liegen die geeigneten Pulsfrequenzen im Bereich zwischen 0,1 und 5000 Pulse/s. Bei kontinuierlicher Fahrweise wird ununterbrochen eingestrahlt, beim Batchbetrieb liegen die Einstrahlzeiten zwischen 0,01 s und 1000 s.
Beim Einsatz von UV-Lampen, die nicht gepulst sind und wesentlich größere Bestrahlungsfenster als UV-Laser aufweisen können, wird bei kontinuierlicher Fahrweise ebenfalls kontinuierlich eingestrahlt. Beim Batchbetrieb liegen die geeigneten Bestrahlungszeiten zwischen 0,01 s und 1h. Bevorzugte Bestrahlungszeiten liegen zwischen 0,1 s und 1000 s.

Für die vorliegende Erfindung gibt es zwei bevorzugte Varianten.

Eine Ausführungsform der Erfindung besteht darin, ohne Katalysator zu arbeiten und kurzwelliges UV-Licht im Wellenlängenbereich von 120 - 250 nm, insbesondere 150 bis 200 nm einzustrahlen, in dem alle Reaktanden und Produkte mehr oder weniger absorbieren.
Eine andere Ausführungsform der Erfindung besteht darin, in Gegenwart eines Katalysators zu arbeiten und mit langwelligem UV-Licht >200 nm derart einzustrahlen, daß nur der Katalysator nennenswert absorbiert und durch Photodissoziation Starterradikale für die Kettenreaktion bildet, während die Edukte und vor allem das Produkt (Alkyldihalogenphosphan) nicht absorbieren und daher vor photolytischer Zersetzung geschützt sind. Eine besonders bevorzugte Ausführungsform der Erfindung besteht darin, Cl₂ als Katalysator einzusetzen und mit UV-Excimer-Strahlung der Wellenlänge 308 nm einzustrahlen. Dadurch wird das Cl₂-Molekül photodissoziiert und die gebildeten Cl-Radikale starten die Kettenreaktion. Die Reaktanden absorbieren bei 308 nm im wesentlichen nicht. Natürlich ist auch die Einstrahlung mit kurzwelligem UV-Licht in Gegenwart eines Katalysators erfindungsgemäß.

Als Mechanismus der Photoinitiierung wird angenommen, daß das UV-Licht durch den großen Absorptionskoeffizienten der Reaktanden bzw. des Katalysators effektiv im System absorbiert wird. Durch die Absorption des Lichts kann es, insbesondere wenn noch ein zweites Photon absorbiert wird, zu einer direkten Photolyse des Reaktanden kommen, wobei freie Starterradikale z.B. Cl⁻ entstehen. Die absorbierte Energie kann aber auch durch interne Konversion zur Anregung höherer rovibronischen Zustände führen, so daß lokal die Temperatur erhöht wird und es zu einer thermischen Dissoziation des Moleküls kommt. Beide Prozesse können sich auch überlagern.

So kann man beispielsweise auch gleichzeitig mehrere Wellenlängen einstrahlen. Auch eine Einstrahlung einer langwelligen Strahlung (z.B. 308 nm zur Aktivierung eines Katalysators), während zusätzlich auf einer kurzen Wellenlänge (z.B. 222 nm) eingestrahlt wird, die von PCl₃ absorbiert wird, ist möglich.

Es ist ferner selbstverständlich, daß mehrere Lampen parallel und in Serie zusammengeschaltet werden können. Der optische Aufbau für den technischen Reaktor könnte so aussehen, daß mehrere Lampen das Reaktionsrohr konzentrisch umgeben und daß viele dieser 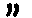 Lampenbündel" entlang des Reaktionsrohres hintereinander angeordnet sind, wobei die einzelnen Bündel auf verschiedenen Wellenlängen und mit unterschiedlichen Intensitäten einstrahlen können, je nach der gewünschten ortsabhängigen Radikalbildungseffizienz.

Die folgenden Beispiele sollen die Erfindung erläutern.

### Beispiele:

### Allgemeiner Versuchsaufbau:

### Reaktorteil:

Als Reaktor kommt ein Rohr aus Quarzglas zum Einsatz, welches für die verwendete UV-Strahlung vollständig transparent ist. Für Licht der Wellenlänge 308 nm ist handelsübliches Quarzglas ausreichend. Für kürzere Wellenlängen muß hochreines Quarzglas verwendet werden (Suprasil®). Die Dimensionen des Quarzreaktorrohrs sind so gewählt, daß je nach Bedarf die ganze effektive Bestrahlungslänge der Excimerlampe oder durch Abschirmung nur ein Teil genutzt wird. Konkret wird ein Quarzrohr mit folgenden Abmessungen eingesetzt: Länge: 400 mm, Außendurchmesser: 10 mm, Innendurchmesser: 8 mm.
Zur Durchführung von Bestrahlungsexperimenten bei höheren Temperaturen kann das Reaktionsgas wahlweise entweder vorgeheizt in den Quarzrohrreaktor geleitet werden (wobei ein Temperaturgradient über die Reaktorlänge in Kauf genommen wird) oder der Quarzreaktor wird mit einer Heizwicklung so umwickelt, daß eine Bestrahlung durch die Zwischenräume der Heizwicklung erfolgen kann.

### Gasversorgung:

Die Gasversorgung der Versuchsapparatur besteht aus kalibrierten Massenflußreglern für Methan, Stickstoff, Chlor und PCl₃, mit denen die Gase bzw. Flüssigkeiten sehr konstant gefördert werden können (Fa. Bronkhorst).

### Produktanalytik:

Als on-line Produktanalytik kommt ein Quadrupol-Massenspektrometer der Fa. Hiden zum Einsatz. Mit dieser Technik können alle Edukte und Produkte quasisimultan mit einer Zeitauflösung von kleiner 1 Sekunde verfolgt werden.

### Bestrahlungsteil:

Zur Anwendung kommt ein kommerzielles Excimer-BlueLight-Modul 308 nm (Fa. Heraeus) mit einer effektiven Bestrahlungslänge der XeCl-Excimerröhre von 300 mm. Das Modul umfaßt ferner ein Vorschaltgerät mit 1.5 kW Leistung sowie eine Kühleinheit mit 10 kW Kühlleistung. Die Lampen-Ausgangsleistung (in UV-Licht umgewandelte Leistung) beträgt 150 W (Wirkungsgrad: 10% der Eingangsleistung). Die Leistungsdichte beträgt 200 mW/cm² (gemessen in 1 cm Abstand).

### Beispiel 1:

Ein Gasgemisch aus Methan (25 sccm/min), PCl₃ (8,4 sccm/min) und Chlor (0,5 bis 1,5 sccm/min) wurde bei einem Absolutdruck von 1 bar durch den beheizten Quarzreaktor (270°C) geleitet und im Abstand von 5 cm zur Excimer-Strahlungsquelle mit UV-Licht der Wellenlänge 308 nm bestrahlt. Bei Chlordosierungen ab 1 sccm/min wurde Methyldichlorphosphan anhand seines Molekülionenpeaks (m/e = 116) neben HCl (m/e = 36) und nicht umgesetzten Edukten nachgewiesen. Nebenprodukte konnten dabei nicht nachgewiesen werden. Auch eine Abscheidung von festen oder flüssigen Nebenprodukten am Quarzrohr wurde über eine Versuchsdauer von mehreren Stunden nicht beobachtet.

Für die Beispiele 2 bis 5 wurde die Gasversorgung entsprechend der durchzuführenden Experimente angepaßt, d.h. also um Massenflußregler für die Dosierung von Ethan und Ethylchlorid und um eine HPLC-Pumpe für die Dosierung von Chlorbenzol erweitert.

Darüber hinaus wurde der Bestrahlungsteil variiert, indem die XeCl-Excimerröhre (Wellenlänge 308 nm) für die Versuche mit den Photoinitiatoren Chlorbenzol bzw. Ethylchlorid durch eine KrCl-Röhre (222 nm) ersetzt wurde.

### Beispiel 2:

Ein Gasgemisch aus Methan (25 sccm/min), PCl₃ (8,4 sccm/min) und Chlorbenzol (0,1 bis 1,5 sccm/min) wurde bei einem Absolutdruck von 1 bar durch den beheizten Quarzreaktor (300°C) geleitet und im Abstand von 1 cm zur Excimer-Strahlungsquelle mit UV-Licht der Wellenlänge 222 nm bestrahlt. Bei Chlorbenzoldosierungen ab 1 sccm/min wurde Methyldichlorphosphan anhand seines Molekülionenpeaks (m/e = 116) neben HCl (m/e = 36) sowie der nichtumgesetzten Edukte nachgewiesen.

### Beispiel 3:

Ein Gasgemisch aus Methan (14,8 sccm/min), PCl₃ (3,7 sccm/min) und Ethylchlorid (1,5 sccm/min) wurde bei einem Absolutdruck von 1 bar durch den beheizten Quarzreaktor (300°C) geleitet und im Abstand von 1 cm zur Excimer-Strahlungsquelle mit UV-Licht der Wellenlänge 222 nm bestrahlt. Methyldichlorphosphan wurde anhand seines Molekülionenpeaks (m/e = 116) neben HCl (m/e = 36) und nichtumgesetzten Edukten nachgewiesen.

### Beispiel 4:

Ein Gasgemisch aus Ethan (14,8 sccm/min), PCl₃ (3,7 sccm/min) und Chlor (1,5 sccm/min) wurde bei einem Absolutdruck von 1 bar durch den beheizten Quarzreaktor (300°C) geleitet und im Abstand von 1 cm zur Excimer-Strahlungsquelle mit UV-Licht der Wellenlänge 308 nm bestrahlt. Ethyldichlorphosphan wurde anhand seines Molekülionenpeaks (m/e = 130) neben HCl (m/e = 36) und nichtumgesetzten Edukten nachgewiesen.

### Beispiel 5:

Ein Gasgemisch aus Ethan (14,8 sccm/min), PCl₃ (3,7 sccm/min) und Chlorbenzol (1,5 sccm/min) wurde bei einem Absolutdruck von 1 bar durch den beheizten Quarzreaktor (300°C) geleitet und im Abstand von 1 cm zur Excimer-Strahlungsquelle mit UV-Licht der Wellenlänge 222 nm bestrahlt. Ethyldichlorphosphan wurde anhand seines Molekülionenpeaks (m/e = 130) neben HCl (m/e = 36) und nichtumgesetzten Edukten nachgewiesen.

## Patentansprüche

1. Verfahren zur Herstellung von aliphatischen Alkyldihalogenphosphanen der allgemeinen Formel RPHal_{2,} mit R=C₁-C₄,-Alkyl und Hal= Cl, Br, I, F durch Umsetzung eines aliphatischen C₁-C₄-Kohlenwasserstoffs mit einem Phosphortrihalogenid, dadurch gekennzeichnet, daß die Reaktion photochemisch mit einer UV-Excimer-Strahlungsquelle initiiert wird.

2. Verfahren nach Anspruch 1, dadurch gekennzeichnet, daß die Reaktion in Gegenwart eines Katalysators stattfindet.

3. Verfahren nach Anspruch 1 und 2, dadurch gekennzeichnet daß der Katalysator ausgewählt ist aus Chlorkohlenwasserstoffen, Cl₂, O₂, COCl₂, NOₓ oder deren Mischungen.

4. Verfahren nach einem der vorhergehenden Ansprüche, dadurch gekennzeichnet daß R = CH₃ ist.

5. Verfahren nach einem der vorhergehenden Ansprüche, dadurch gekennzeichnet daß Hal = Chlor ist.

6. Verfahren nach einem der vorhergehenden Ansprüche, dadurch gekennzeichnet daß die Menge des Katalysators 0-50 mol%, insbesondere 0.1 - 20 mol%, bezogen auf das Phosphortrihalogenid, beträgt.

7. Verfahren nach einem der vorhergehenden Ansprüche, dadurch gekennzeichnet daß das Molverhältnis des aliphatischen Kohlenwasserstoffs zum Phosphortrihalogenid zwischen 10 : 1 und 1 : 10 liegt.

8. Verfahren nach einem der vorhergehenden Ansprüche, dadurch gekennzeichnet daß die Reaktionstemperatur im Bereich von 0°C bis 650°C liegt.

9. Verfahren nach einem der vorhergehenden Ansprüche, dadurch gekennzeichnet daß der Reaktionsdruck zwischen 500 mbar und 25 bar liegt.

10. Verfahren nach einem der vorhergehenden Ansprüche, dadurch gekennzeichnet daß die Verweilzeit des Gemisches der Reaktionsbestandteile im Reaktionsraum zwischen 0.1 und 1000 Sekunden liegt.

11. Verfahren nach einem der vorhergehenden Ansprüche, dadurch gekennzeichnet daß die UV-Excimer-Strahlung mittels gepulster Excimer-Laser erzeugt wird.

12. Verfahren nach einem der vorhergehenden Ansprüche, dadurch gekennzeichnet daß die UV-Excimer-Strahlung mittels inkohärenter Excimer-Lampen erzeugt wird.

13. Verfahren nach Anspruch 1 oder einem der Ansprüche 4 bis 12, dadurch gekennzeichnet daß das Verfahren in Abwesenheit eines Katalysators durchgeführt wird und kurzwelliges UV-Licht im Wellenlängenbereich von 120 - 250 nm eingestrahlt wird.

14. Verfahren nach einem der Ansprüche 1 bis 12, dadurch gekennzeichnet, daß das Verfahren in Gegenwart eines Katalysators durchgeführt wird und langweilige UV-Strahlung im Wellenlängenbereich > 200 nm derart eingestrahlt wird, daß nur der Katalysator die angebotene UV-Strahlung nennenswert absorbiert und die Reaktanden und das Produkt die Strahlung nicht absorbieren.

15. Verfahren nach einem der Ansprüche 1 bis 14, dadurch gekennzeichnet daß das Verfahren in der Gasphase durchgeführt wird.

16. Verfahren nach einem der Ansprüche 1 bis 15, dadurch gekennzeichnet daß es sich um ein kontinuierlich betriebenes Verfahren handelt.
